# FASCICULE DE BREVET EUROPEEN

(11) **EP 4 459 349 B1**
(45) Date de publication et mention de la délivrance du brevet: **25.02.2026**
(21) Numéro de dépôt: 23171138.3
(22) Date de dépôt: 02.05.2023
(51) Int. Cl.: G02B 7/00, G02B 23/18, A44C 5/00

(54) **BRACELET POUR OBJET PORTABLE, TEL QU'UNE PIECE D'HORLOGERIE, COMPORTANT UN DISPOSITIF GROSSISSANT**
ARMBAND FÜR EIN TRAGBARES OBJEKT, WIE EINE UHR, MIT EINER VERGRÖSSERUNGSVORRICHTUNG
WRISTBAND FOR PORTABLE OBJECT, SUCH AS A TIMEPIECE, COMPRISING A MAGNIFYING DEVICE

(43) Date de publication de la demande: 06.11.2024
(73) Titulaire: The Swatch Group Research and Development Ltd, 2074 Marin (CH)
(72) Inventeur: WILLEMIN, Michel, 2515 Prêles (CH); FRANÇOIS, Nicolas, 2000 Neuchâtel (CH); TORTORA, Pierpasquale, 2000 Neuchâtel (CH); DOVCIK, Marek, 06250 Mougins (FR); NAPOLI, Sophie, 2000 Neuchâtel (CH); NICOLAS, Cédric, 2000 Neuchâtel (CH); BOURBAN, Stewes, 1589 Chabrey (CH)
(74) Mandataire: ICB SA

(56) Documents cités:
- CN-A- 107 510 185
- CN-U- 212 873 223
- US-A1- 2011 005 274

## Description

### Domaine technique de l'invention

La présente invention concerne un bracelet destiné à être fixé au boitier d'un objet portable, tel qu'une pièce d'horlogerie, par exemple à un boitier d'une montre.

L'invention concerne plus particulièrement un bracelet comportant un dispositif grossissant permettant à l'utilisateur d'observer des composants ou des détails de l'objet portable ou d'un autre objet, par exemple une pièce d'horlogerie.

### Arrière-plan technologique

De tels bracelets intégrant un dispositif grossissant de type loupe ou lentille de Fresnel sont connus. Par exemple, le document US 5601222 décrit un bracelet de montre comportant une bande de grossissement intégré dans un brin d'un bracelet. Le document US2011/005274 divulgue un bracelet de montre comportant un premier brin avec un dispositif optique selon le préambule de la revendication 1.

Toutefois, le grossissement d'un tel dispositif est limité et peu convainquant lorsqu'il s'agit d'observer des détails de très petits dimensions, par exemple d'un mouvement d'horlogerie équipant la pièce d'horlogerie.

Par conséquent, il existe un besoin pour améliorer de tels dispositifs.

### Résumé de l'invention

Dans ce contexte, l'invention propose un bracelet pour objet portable comportant un premier brin et un deuxième brin, chacun des brins comportant une première extrémité apte à être attachée à une boîte de l'objet portable, caractérisé en ce que :
- le premier brin comporte un premier dispositif optique présentant un premier diamètre ;
- le deuxième brin comporte un deuxième dispositif optique présentant un deuxième diamètre, inférieur au première diamètre du premier dispositif optique ;
le premier dispositif optique et le deuxième dispositif optique étant configurés pour que la superposition du premier dispositif optique et du deuxième dispositif optique, par la superposition du premier brin et du deuxième brin, forme un microscope présentant un oculaire constitué par le premier dispositif optique et un objectif constitué par le deuxième dispositif optique.

Outre les caractéristiques évoquées dans le paragraphe précédent, le bracelet selon l'invention peut présenter une ou plusieurs caractéristiques complémentaires parmi les suivantes, considérées individuellement ou selon toutes les combinaisons techniquement possibles :
- le premier dispositif optique est une première lentille optique ;
- le deuxième dispositif optique est une deuxième lentille optique ;
- la première lentille optique du premier dispositif optique présente une distance focale f1 de 100 mm et en ce que ladite deuxième lentille du deuxième dispositif optique présente une distance focale f2 de 27 mm ;
- le premier dispositif optique et/ou le deuxième dispositif optique sont réalisés en matériau synthétique, en matériau polymère, en matériau minéral, préférentiellement en verre ou en verre saphir ;
- le premier dispositif optique est intégré, au moins partiellement, dans l'épaisseur du premier brin, préférentiellement totalement dans l'épaisseur du premier brin ;
- le deuxième dispositif optique est intégré, au moins partiellement, dans l'épaisseur du deuxième brin, préférentiellement totalement dans l'épaisseur du deuxième brin ;
- le bracelet comporte au moins un espaceur configuré pour assurer un espacement entre le premier dispositif optique et le deuxième dispositif optique lors de la superposition du premier brin et du deuxième brin du bracelet ;
- le bracelet comporte un passant, ledit au moins un espaceur étant formé par ledit passant ;
- le bracelet comporte deux espaceurs ;
- le bracelet comporte un premier passant et un deuxième passant formant lesdits deux espaceurs, le premier passant et le deuxième passant présentant des dimensions configurées pour assurer un espacement entre le premier dispositif optique et le deuxième dispositif optique lors de la superposition du premier brin et du deuxième brin ;
- les deux passants sont ajustables en position pour venir recouvrir le premier dispositif optique ou le deuxième dispositif optique pour former un élément de protection des dispositifs optiques, notamment lorsque l'objet portable est porté ;
- le bracelet comporte des moyens pour assurer une superposition concentrique du premier dispositif optique et du deuxième dispositif optique ;
- le bracelet comporte des moyens de couplage pour assurer un maintien en position des deux brins superposés ;
- le bracelet est en cuir, en matière métallique, en matière polymère, en matière synthétique, en matière céramique, en matière naturelle, en matière biosourcée ou dans une combinaison d'au moins deux desdites matières listées.

L'invention a également pour objet une pièce d'horlogerie comportant une boîte intégrant un mouvement d'horlogerie et un bracelet selon l'invention attaché à la boîte.

### Brève description des figures

Les buts, avantages et caractéristiques de la présente invention apparaîtront à la lecture de la description détaillée ci-dessous faisant référence aux figures suivantes :
- la figure 1 représente schématiquement une vue en dessus d'un objet portable 1 selon l'invention ;
- la figure 2 représente schématiquement une vue de côté de l'objet portable 1 illustré à la figure 1.

Dans toutes les figures, les éléments communs portent les mêmes numéros de référence sauf précision contraire.

### Description détaillée de l'invention

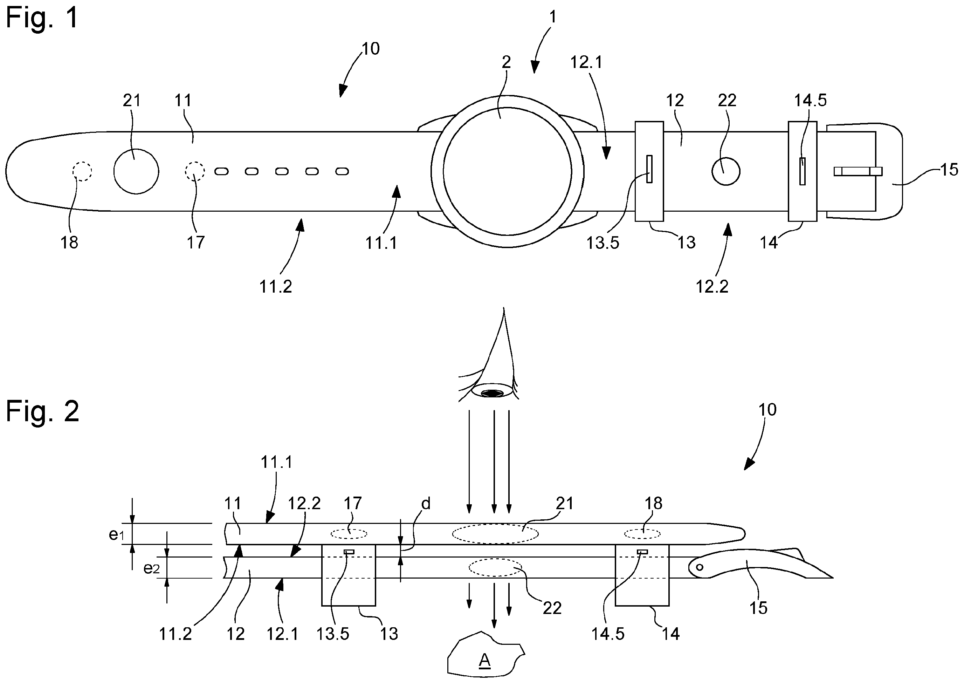

La figure 1 représente schématiquement une vue en dessus d'un objet portable 1 selon l'invention.

La figure 2 représente schématiquement une vue de côté de l'objet portable 1 illustré à la figure 1.

Cet objet portable 1 prend ici la forme d'une pièce d'horlogerie, telle qu'une montre bracelet destinée à être portée au poignet de l'utilisateur. On comprendra également que l'objet portable 1 peut être tout autre objet portable destiné à être porté par l'intermédiaire d'un bracelet, par exemple au niveau du poignet.

L'objet portable 1 comporte un boitier 2, destiné à recevoir par exemple un mouvement d'horlogerie (non représenté ici pour des raisons de clarté). Le mouvement d'horlogerie porte et entraine des moyens d'affichage d'une information, par exemple l'heure courante.

L'objet portable 1 comporte également un bracelet 10 souple ou articulé dont deux extrémités sont destinées à être couplées, par exemple de manière amovible, à la carrure du boitier 2, via un système de fixation ad hoc qui ne sera pas détaillé dans la présente demande.

Le bracelet 10 comporte un premier brin 11 présentant une épaisseur e₁ et un deuxième brin 12 présentant une épaisseur e₂, chacun des brins 11, 12 étant attaché au niveau d'une extrémité à la boîte 2.

Le bracelet 10 comporte classiquement un fermoir 15, par exemple une boucle ardillon, une boucle déployante simple ou double, un fermoir à clip, à coulisse, à scratch, élastique, permettant d'attacher les deux autres extrémités des brins 11, 12 du bracelet 10 et de porter au poignet l'objet portable 1.

Le premier brin 11 comporte un premier dispositif optique 21 intégré, au moins partiellement, dans l'épaisseur e₁ du premier brin 11. Le premier dispositif optique 21 est par exemple une lentille optique.

Le premier dispositif optique 21 est caractérisé par un premier diamètre L1 et une première distance focale f1.

Le deuxième brin 12 comporte un deuxième dispositif optique 22 intégré, au moins partiellement, dans l'épaisseur e₂ du deuxième brin 12. Le deuxième dispositif optique 22 est par exemple une lentille optique.

Le deuxième dispositif optique 22 est caractérisé par un deuxième diamètre L2 et une deuxième distance focale f2.

Le diamètre L1 du premier dispositif optique 21 est supérieur au diamètre L2 du deuxième dispositif optique 22.

Par exemple, le premier dispositif optique 21 est une lentille optique présentant une forme plano convexe.

Par exemple, le premier dispositif optique 21 est une lentille optique présentant un diamètre L1 de 15mm, une distance focale f1 de 60mm et une épaisseur centrale de 2mm.

Par exemple, le deuxième dispositif optique 22 est une lentille optique présentant une forme plano convexe.

Par exemple, le deuxième dispositif optique 22 est une lentille optique présentant un diamètre L2 de 9mm, une distance focale f2 de 13,5mm et une épaisseur centrale de 2mm.

Le bracelet 10 est configuré pour permettre une superposition du premier brin 11 et du deuxième brin 12 de manière à superposer le premier dispositif optique 21 et le deuxième dispositif optique 22 afin de créer un dispositif grossissant de type microscope portatif composé d'un oculaire formé par le premier dispositif optique 21 et d'un objectif formé par le deuxième dispositif optique 22.

Avec la combinaison des propriétés optiques des dispositifs optiques 21, 22 décrits précédemment, et en les superposant d'une distance de séparation d de 1,5mm, avec le premier dispositif optique 21 comme oculaire et le deuxième dispositif optique 22 comme objectif, on obtient un dispositif grossissant de type microscope présentant une focale résultante de l'ordre de 11mm, ce que correspond à un grossissement de l'ordre de x22.

Bien entendu, la superposition mentionnée dans le paragraphe précédent est possible lorsque l'utilisateur ne porte pas l'objet à son poignet.

Pour former le microscope portatif du bracelet 10, le premier brin 11 comportant le premier dispositif optique 21 constituant l'oculaire du microscope est positionné au-dessus du deuxième brin 12 comportant le deuxième dispositif optique 22 constituant l'objectif du microscope.

Ainsi, pour former le microscope portatif, le premier brin 11 est destiné à être du côté de l'utilisateur et le deuxième brin 12 est destiné à être du côté de l'objet A à observer, comme illustré à la figure 2.

Le premier dispositif optique 21 et/ou le deuxième dispositif optique 22 sont réalisés en matériau synthétique, en matériau polymère, en matériau minéral.

Préférentiellement, le premier dispositif optique 21 et/ou le deuxième dispositif optique 22 sont réalisés en verre ou en verre saphir.

Préférentiellement, le premier dispositif optique 21 est intégré totalement dans l'épaisseur e₁ du premier brin 11. Ainsi, l'épaisseur e₁ du premier brin 11 est supérieure à l'épaisseur du premier dispositif optique 21.

Par exemple, le premier dispositif optique 21 est affleurant avec au moins une surface externe supérieure 11.1 ou une surface externe inférieure 11.2 du premier brin 11.

Par exemple, le premier dispositif optique 21 peut être en saillie par rapport à la surface externe supérieure 11.1 du premier brin 11. En revanche, on évitera d'avoir une portion du premier dispositif optique 21 en saillie par rapport à la surface externe inférieure 11.2 pour éviter une gêne ou un inconfort lors du portage de l'objet portable 1.

Préférentiellement, le deuxième dispositif optique 22 est intégré totalement dans l'épaisseur e₂ du deuxième brin 12. Ainsi, l'épaisseur e₂ du deuxième brin 11 est supérieure à l'épaisseur du deuxième dispositif optique 21.

Par exemple, le deuxième dispositif optique 22 est affleurant avec au moins une surface externe supérieure 12.1 ou une surface externe inférieure 12.2 du deuxième brin 12.

Par exemple, le deuxième dispositif optique 22 peut être en saillie par rapport à la surface externe supérieure 12.1 du deuxième brin 12. En revanche, on évitera d'avoir une portion du deuxième dispositif optique 22 en saillie par rapport à la surface externe inférieure 12.2 pour éviter une gêne ou un inconfort lors du portage de l'objet portable 1.

Dans la présente demande, on considère que les surfaces externes supérieures sont les surfaces du bracelet 10 visibles par l'utilisateur, et les surface externes inférieures sont les surfaces du bracelet au contact, au moins partiellement, avec la peau du porteur.

Le bracelet 10 comporte au moins un espaceur permettant de ménager une distance de séparation entre le premier dispositif optique 21 le deuxième dispositif optique 22 lors de la superposition du premier brin 11 et du deuxième brin 12 du bracelet 10, de manière assurer le bon espacement d en fonction des caractéristiques des dispositifs optiques 21, 22.

Préférentiellement le bracelet 10 comporte deux espaceurs. Les espaceurs sont, par exemple, situés de part et d'autre du premier dispositif optique 21 et du deuxième dispositif optique 22.

Classiquement, le bracelet 10 comporte deux passants 13, 14 montés sur le deuxième brin 12 du bracelet 10.

A titre d'exemple un premier passant 14 est fixe sur le deuxième brin 12 et un deuxième passant 13 est mobile, c'est-à-dire déplaçable le long du deuxième brin 12 et donc ajustable en position sur le bracelet 10.

Selon une variante de réalisation, le premier passant 14 et le deuxième passant 13 sont mobiles, c'est-à-dire déplaçables le long du deuxième brin 12, et donc ajustables en position sur le bracelet 10.

Bien entendu, les passants 13, 14 peuvent être montés sur le premier brin 11 du bracelet 10, ou encore chaque brin 11, 12 du bracelet 10 peut porter un passant 13, 14.

La mobilité des passants 13, 14 permet de pouvoir les positionner en regard des dispositifs optiques 21, 22 de manière à les recouvrir et former un élément de protection lorsque l'utilisateur porte l'objet portable 1 au poignet.

Préférentiellement, lorsque le premier passant 14 est fixe, le deuxième passant 13 est mobile et présente une largeur équivalente ou supérieure au diamètre L1 du premier dispositif optique 21 afin de pouvoir recouvrir entièrement le premier dispositif optique 21.

Par exemple, les passants 13, 14 sont configurés pour former les espaceurs du bracelet 10 et assurer un espacement (ou distance de séparation) d entre le premier dispositif optique 21 le deuxième dispositif optique 22. Ainsi, les passants 13, 14 présentent des dimensions requises pour assurer l'espacement d requis en fonction des dispositifs optiques 21, 22 utilisés.

Le bracelet 10 peut comporter des moyens pour assurer une superposition concentrique du premier dispositif optique 21 et du deuxième dispositif optique 22.

Le bracelet 10 peut également comporter des éléments de couplage pour maintenir en contact les deux brins 11, 12 superposés l'un sur l'autre, de manière à faciliter l'observation de l'utilisateur qui n'a pas besoin de maintenir en position les deux brins 11, 12. Les éléments de couplage sont par exemple des éléments de couplage mécanique réversibles ou magnétique.

On peut citer à titre d'exemples non limitatifs des éléments de couplage mécanique du type pression ou encore des éléments magnétiques et ferromagnétiques pour le couplage magnétique.

Par exemple, chacun des passants 13, 14 peut incorporer dans son épaisseur de matière un corps ferromagnétique 13.5, 14.5 et le brin du bracelet 10 qui ne portent pas les passants 13, 14 (dans notre exemple de réalisation, le premier brin 11) peut incorporer dans son épaisseur deux aimants 17, 18 configurés pour coopérer avec les corps ferromagnétiques 13.5, 14.5 par attraction magnétique.

Le bracelet 10 peut être en cuir, en matière métallique, en matière synthétique, en matière polymère, en matière céramique, en matière naturelle, en matière biosourcée, ou dans une combinaison d'au moins deux desdites matières listées.

En fonction de la matière utilisé pour la fabrication du bracelet 10, les dispositifs optiques 21, 22 peuvent être introduits dans des découpes, logements prévus à cet effet puis solidarisés par des moyens de collage, soudage, etc.

Les dispositifs optiques 21, 22 peuvent également être solidarisés aux brins 11, 12 du bracelet 10 par surmoulage.

## Revendications

1. Bracelet (10) pour objet portable (1) comportant un premier brin (11) et un deuxième brin (12), chacun des brins (11, 12) comportant une première extrémité apte à être attachée à une boîte (2) de l'objet portable (1), **caractérisé en ce que**
- le premier brin (11) comporte un premier dispositif optique (21) présentant un premier diamètre (L1) ;
**caractérisé en ce que**
- le deuxième brin (12) comporte un deuxième dispositif optique (22) présentant un deuxième diamètre (L2), inférieur au première diamètre (L1) du premier dispositif optique (21) ;
le premier dispositif optique (21) et le deuxième dispositif optique (22) étant configurés pour que la superposition du premier dispositif optique (21) et du deuxième dispositif optique (22), par la superposition du premier brin (11) et du deuxième brin (12), forme un microscope présentant un oculaire constitué par le premier dispositif optique (21) et un objectif constitué par le deuxième dispositif optique (22).

2. Bracelet (10) pour objet portable (1) selon la revendication précédente **caractérisé en ce que** le premier dispositif optique (21) est une première lentille optique.

3. Bracelet (10) pour objet portable (1) selon l'une des revendications précédentes **caractérisé en ce que** le deuxième dispositif optique (22) est une deuxième lentille optique.

4. Bracelet (10) pour objet portable (1) selon l'une des revendications précédentes **caractérisé en ce que** le premier dispositif optique (21) et/ou le deuxième dispositif optique (22) sont réalisés en matériau synthétique, en matériau polymère, en matériau minéral, préférentiellement en verre ou en verre saphir.

5. Bracelet (10) pour objet portable (1) selon l'une des revendications précédentes **caractérisé en ce que** le premier dispositif optique (21) est intégré, au moins partiellement, dans l'épaisseur (e₁) du premier brin (11), préférentiellement totalement dans l'épaisseur (e₁) du premier brin (11).

6. Bracelet (10) pour objet portable (1) selon l'une des revendications précédentes **caractérisé en ce que** le deuxième dispositif optique (21) est intégré, au moins partiellement, dans l'épaisseur (e₂) du deuxième brin (12), préférentiellement totalement dans l'épaisseur (e₂) du deuxième brin (12).

7. Bracelet (10) pour objet portable (1) selon l'une des revendications précédentes **caractérisé en ce que** le bracelet (10) comporte au moins un espaceur (13, 14) configuré pour assurer un espacement (d) entre le premier dispositif optique (21) et le deuxième dispositif optique (22) lors de la superposition du premier brin (11) et du deuxième brin (12) du bracelet (10).

8. Bracelet (10) pour objet portable (1) selon la revendication précédente **caractérisé en ce que** le bracelet (10) comporte un passant (13, 14), ledit au moins un espaceur étant formé par ledit passant.

9. Bracelet (10) pour objet portable (1) selon l'une des revendications 7 à 8 **caractérisé en ce que** le bracelet (10) comporte deux espaceurs (13, 14).

10. Bracelet (10) pour objet portable (1) selon la revendication 9 **caractérisé en ce que** le bracelet (10) comporte un premier passant (13) et un deuxième passant (14) formant lesdits deux espaceurs, le premier passant (13) et le deuxième passant (14) présentant des dimensions configurées pour assurer un espacement (d) entre le premier dispositif optique (21) et le deuxième dispositif optique (22) lors de la superposition du premier brin (11) et du deuxième brin (12).

11. Bracelet (10) pour objet portable (1) selon la revendication précédente **caractérisé en ce que** les deux passants (13, 14) sont ajustables en position pour venir recouvrir le premier dispositif optique (21) ou le deuxième dispositif optique (22) pour former un élément de protection des dispositifs optiques (21, 22).

12. Bracelet (10) pour objet portable (1) selon la revendication précédente **caractérisé en ce que** le bracelet (10) comporte des moyens pour assurer une superposition concentrique du premier dispositif optique (21) et du deuxième dispositif optique (22).

13. Bracelet (10) pour objet portable (1) selon la revendication précédente **caractérisé en ce que** le bracelet (10) comporte des moyens de couplage (13.5, 14.5, 17, 18) pour assurer un maintien en position des deux brins (11, 12) superposés.

14. Bracelet (10) pour objet portable (1) selon l'une des revendications précédentes **caractérisé en ce que** le bracelet (10) est en cuir, en matière métallique, en matière polymère, en matière synthétique, en matière céramique, en matière naturelle, en matière biosourcée ou dans une combinaison d'au moins deux desdites matières listées.

15. Objet portable (1) **caractérisé en ce qu'**il est une pièce d'horlogerie comportant une boîte (2) intégrant un mouvement d'horlogerie, et un bracelet selon l'une des revendications précédentes attaché à ladite boîte (2).

## Patentansprüche

1. Armband (10) für ein tragbares Objekt (1), umfassend einen ersten Armbandteil (11) und einen zweiten Armbandteil (12), wobei jeder der Armbandteile (11, 12) ein erstes Ende aufweist, das dazu geeignet ist, an einem Gehäuse (2) des tragbaren Objekts (1) befestigt zu werden, der erste Armbandteil (11) eine erste optische Vorrichtung (21) mit einem ersten Durchmesser (L1) aufweist, **dadurch gekennzeichnet, dass** der zweite Armbandteil (12) eine zweite optische Vorrichtung (22) mit einem zweiten Durchmesser (L2) aufweist, der kleiner ist als der erste Durchmesser (L1) der ersten optischen Vorrichtung (21); wobei die erste optische Vorrichtung (21) und die zweite optische Vorrichtung (22) derart konfiguriert sind, dass die Überlagerung der ersten optischen Vorrichtung (21) und der zweiten optischen Vorrichtung (22) durch Überlagerung des ersten Armbandteils (11) und des zweiten Armbandteils (12) ein Mikroskop bildet, das ein Okular, welches durch die erste optische Vorrichtung (21) gebildet ist, und ein Objektiv, welches durch die zweite optische Vorrichtung (22) gebildet ist, aufweist.

2. Armband (10) für ein tragbares Objekt (1) nach dem vorhergehenden Anspruch, **dadurch gekennzeichnet, dass** die erste optische Vorrichtung (21) eine erste optische Linse ist.

3. Armband (10) für ein tragbares Objekt (1) nach einem der vorhergehenden Ansprüche, **dadurch gekennzeichnet, dass** die zweite optische Vorrichtung (22) eine zweite optische Linse ist.

4. Armband (10) für ein tragbares Objekt (1) nach einem der vorhergehenden Ansprüche, **dadurch gekennzeichnet, dass** die erste optische Vorrichtung (21) und/oder die zweite optische Vorrichtung (22) aus synthetischem Material, aus Polymermaterial oder aus mineralischem Material gefertigt sind, vorzugsweise aus Glas oder Saphirglas.

5. Armband (10) für ein tragbares Objekt (1) nach einem der vorhergehenden Ansprüche, **dadurch gekennzeichnet, dass** die erste optische Vorrichtung (21) mindestens teilweise in der Dicke (e1) des ersten Armbandteils (11) integriert ist, vorzugsweise vollständig in der Dicke (e1) des ersten Armbandteils (11).

6. Armband (10) für ein tragbares Objekt (1) nach einem der vorhergehenden Ansprüche, **dadurch gekennzeichnet, dass** die zweite optische Vorrichtung (21) mindestens teilweise in die Dicke (e2) des zweiten Armbandteils (12) integriert ist, vorzugsweise vollständig in die Dicke (e 2) des zweiten Armbandteils (12).

7. Armband (10) für ein tragbares Objekt (1) nach einem der vorhergehenden Ansprüche, **dadurch gekennzeichnet, dass** das Armband (10) mindestens einen Abstandshalter (13, 14) aufweist, der dazu konfiguriert ist, beim Überlagern des ersten Armbandteils (11) und des zweiten Armbandteils (12) des Armbands (10) einen Abstand (d) zwischen der ersten optischen Vorrichtung (21) und der zweiten optischen Vorrichtung (22) sicherzustellen.

8. Armband (10) für ein tragbares Objekt (1) nach dem vorhergehenden Anspruch, **dadurch gekennzeichnet, dass** das Armband (10) eine Bandschlaufe (13, 14) aufweist, wobei der mindestens eine Abstandshalter durch die Bandschlaufe gebildet ist.

9. Armband (10) für ein tragbares Objekt (1) nach einem der Ansprüche 7 bis 8, **dadurch gekennzeichnet, dass** das Armband (10) zwei Abstandshalter (13, 14) aufweist.

10. Armband (10) für ein tragbares Objekt (1) nach Anspruch 9, **dadurch gekennzeichnet, dass** das Armband (10) eine erste Bandschlaufe (13) und eine zweite Bandschlaufe (14) aufweist, welche die beiden Abstandshalter bilden, wobei die erste Bandschlaufe (13) und die zweite Bandschlaufe (14) Abmessungen aufweisen, die dazu konfiguriert sind, beim Überlagern des ersten Armbandteils (11) und des zweiten Armbandteils (12) einen Abstand (d) zwischen der ersten optischen Vorrichtung (21) und der zweiten optischen Vorrichtung (22) sicherzustellen.

11. Armband (10) für ein tragbares Objekt (1) nach dem vorhergehenden Anspruch, **dadurch gekennzeichnet, dass** die beiden Bandschlaufen (13, 14) in ihrer Position verstellbar sind, um die erste optische Vorrichtung (21) oder die zweite optische Vorrichtung (22) zu überdecken, um ein Schutzelement für die optischen Vorrichtungen (21, 22) zu bilden.

12. Armband (10) für ein tragbares Objekt (1) nach dem vorhergehenden Anspruch, **dadurch gekennzeichnet, dass** das Armband (10) Mittel aufweist, um eine konzentrische Überlagerung der ersten optischen Vorrichtung (21) und der zweiten optischen Vorrichtung (22) sicherzustellen.

13. Armband (10) für ein tragbares Objekt (1) nach dem vorhergehenden Anspruch, **dadurch gekennzeichnet, dass** das Armband (10) Kopplungsmittel (13.5, 14.5, 17, 18) aufweist, um eine Fixierung der beiden übereinanderliegenden Armbandteile (11, 12) in Position sicherzustellen.

14. Armband (10) für ein tragbares Objekt (1) nach einem der vorhergehenden Ansprüche, **dadurch gekennzeichnet, dass** das Armband (10) aus Leder, metallischem Material, Polymermaterial, synthetischem Material, keramischem Material, natürlichem Material, biobasiertem Material oder aus einer Kombination von mindestens zwei der genannten Materialien besteht.

15. Tragbares Objekt (1), **dadurch gekennzeichnet, dass** es ein Zeitmesser ist, umfassend ein Gehäuse (2), das ein Uhrwerk enthält, und ein Armband nach einem der vorhergehenden Ansprüche, das an dem Gehäuse (2) befestigt ist.

## Claims

1. Bracelet (10) for a portable object (1) comprising a first strand (11) and a second strand (12), each of the strands (11, 12) comprising a first end able to be attached to a case (2) of the portable object (1), the first strand (11) comprising a first optical device (21) with a first diameter (L1), **characterised in that** the second strand (12) comprises a second optical device (22) with a second diameter (L2), smaller than the first diameter (L1) of the first optical device (21); the first optical device (21) and the second optical device (22) being configured so that the superposition of the first optical device (21) and the second optical device (22), by the superposition of the first strand (11) and the second strand (12), forms a microscope having an eyepiece constituted by the first optical device (21) and an objective constituted by the second optical device (22).

2. Bracelet (10) for a portable object (1) according to the preceding claim, **characterised in that** the first optical device (21) is a first optical lens.

3. Bracelet (10) for a portable object (1) according to one of the preceding claims, **characterised in that** the second optical device (22) is a second optical lens.

4. Bracelet (10) for a portable object (1) according to one of the preceding claims, **characterised in that** the first optical device (21) and/or the second optical device (22) are made of synthetic material, polymer material, mineral material, preferably glass or sapphire glass.

5. Bracelet (10) for a portable object (1) according to one of the preceding claims, **characterised in that** the first optical device (21) is integrated, at least partially, into the thickness (e₁) of the first strand (11), preferably completely into the thickness (e₁) of the first strand (11).

6. Bracelet (10) for a portable object (1) according to one of the preceding claims, **characterised in that** the second optical device (21) is integrated, at least partially, into the thickness (e₂) of the second strand (12), preferably completely into the thickness (e₂) of the second strand (12).

7. Bracelet (10) for a portable object (1) according to one of the preceding claims, **characterised in that** the bracelet (10) comprises at least one spacer (13, 14) configured to ensure a spacing (d) between the first optical device (21) and the second optical device (22) when the first strand (11) and the second strand (12) of the bracelet (10) are superimposed.

8. Bracelet (10) for a portable object (1) according to the preceding claim, **characterised in that** the bracelet (10) comprises a loop (13, 14), said at least one spacer being formed by said loop.

9. Bracelet (10) for a portable object (1) according to one of claims 7 to 8, **characterised in that** the bracelet (10) comprises two spacers (13, 14).

10. Bracelet (10) for a portable object (1) according to claim 9, **characterised in that** the bracelet (10) comprises a first loop (13) and a second loop (14) forming said two spacers, the first loop (13) and the second loop (14) having dimensions configured to ensure spacing (d) between the first optical device (21) and the second optical device (22) when the first strand (11) and the second strand (12) are superimposed.

11. Bracelet (10) for a portable object (1) according to the preceding claim, **characterised in that** the two loops (13, 14) are adjustable in position so as to cover the first optical device (21) or the second optical device (22) to form an element for protecting the optical devices (21, 22).

12. Bracelet (10) for a portable object (1) according to the preceding claim, **characterised in that** the bracelet (10) comprises means for ensuring concentric superposition of the first optical device (21) and the second optical device (22).

13. Bracelet (10) for a portable object (1) according to the preceding claim, **characterised in that** the bracelet (10) comprises coupling means (13.5, 14.5, 17, 18) for holding in position the first strand (11) and the second strand (120) superimposed.

14. Bracelet (10) for a portable object (1) according to one of the preceding claims, **characterised in that** the bracelet (10) is made of leather, metallic material, polymer material, synthetic material, ceramic material, natural material, biosourced material or a combination of at least two of the said listed materials.

15. Wearable object (1) **characterised in that** it is a timepiece comprising a case (2) incorporating a watch movement, and a bracelet according to one of the preceding claims attached to said case (2).
